(19) **Europäisches Patentamt / European Patent Office / Office européen des brevets**

(11) **EP 0 920 913 B1**

(12) **EUROPÄISCHE PATENTSCHRIFT**

(45) Veröffentlichungstag und Bekanntmachung des Hinweises auf die Patenterteilung:
**31.01.2007 Patentblatt 2007/05**

(51) Int Cl.:
**B01J 37/02** *(2006.01)*

(21) Anmeldenummer: **98121666.6**

(22) Anmeldetag: **13.11.1998**

(54) **Verfahren zur Herstellung eines beschichteten Katalysators**

Process for the preparation of a coated catalyst

Procédé de préparation d'un catalyseur en coqué

(84) Benannte Vertragsstaaten:
**AT BE DE ES FI FR GB IT LU NL PT SE**

(30) Priorität: **04.12.1997 DE 19753738**

(43) Veröffentlichungstag der Anmeldung:
**09.06.1999 Patentblatt 1999/23**

(73) Patentinhaber: **Umicore AG & Co. KG**
**63457 Hanau-Wolfgang (DE)**

(72) Erfinder:
  • **Klein, Harald Dr.**
    **63856 Bessenbach (DE)**
  • **Leyrer, Jürgen Dr.**
    **79618 Rheinfelden (DE)**
  • **Domesle, Rainer Dr.**
    **63755 Alzenau-Kälberau (DE)**
  • **Lox, Egbert Dr.**
    **63457 Hanau (DE)**

  • **Kreuzer, Thomas Dr.**
    **61184 Karben (DE)**

(74) Vertreter: **Stellbrink, Axel et al**
**Vossius & Partner**
**Siebertstrasse 4**
**81675 München (DE)**

(56) Entgegenhaltungen:
**EP-A- 0 596 552     EP-A- 0 714 692**
**DE-A- 2 818 824     US-A- 4 650 782**
**US-A- 5 272 125**

  • **H. KNÖZINGER: "Acidic and basic properties of aluminas in relation to their properties as catalysts and supports" STUDIES IN SURFACE SCIENCE AND CATALYSIS, 1985, Seiten 111-125, XP002095655 amsterdam**

## Beschreibung

Die vorliegende Erfindung betrifft ein Verfahren zur Herstellung eines Katalysators, welcher auf einem inerten Tragkörper eine katalytisch aktive Beschichtung aus hochoberflächigen, feinteiligen Materialien und katalytisch aktiven Komponenten aufweist, durch Aufbringen der katalytisch aktiven Komponenten auf die feinteiligen Materialien, Anfertigen einer Beschichtungsdispersion aus diesen Materialien und Beschichten des Tragkörpers damit.

Das gattungsgemäße Verfahren liefert Katalysatoren, die in vielen Bereichen der chemischen Technik eingesetzt werden. Es handelt sich um sogenannte Trägerkatalysatoren, bei denen die katalytisch aktiven Komponenten in hochdisperser Form auf Trägermaterialen aufgebracht werden, um mit möglichst geringen Mengen aktiver Komponenten eine hohe katalytische Aktivität des Katalysators zu gewährleisten. Zu diesem Zweck werden Trägermaterialien verwendet, die eine große spezifische Oberfläche zur Aufnahme der katalytisch aktiven Komponenten besitzen. Es handelt sich dabei zumeist um feinteilige, das heißt pulverförmige, temperaturstabile Metalloxide.

Im Falle von Autoabgaskatalysatoren werden die Trägermaterialien in Form einer Beschichtung auf katalytisch inerte Tragkörper aufgebracht. Als Tragkörper eignen sich für die Autoabgasreinigung sogenannte Wabenkörper aus Keramik oder Metall, die von parallelen Strömungskanälen für das Abgas durchzogen werden. Zum Beschichten der Wabenkörper mit den Trägermaterialien werden die Trägermaterialien zumeist in Wasser dispergiert und gewöhnlich durch einen Mahlvorgang homogenisiert. Durch das Mahlen wird die mittlere Korngröße der Trägermaterialien auf einen Wert zwischen 1 und 10 μm eingestellt.

Die Wände der Strömungskanäle werden durch ein- oder mehrmaliges Eintauchen der Wabenkörper in diese Beschichtungsdispersion mit nachfolgendem Trocknen und Kalzinieren beschichtet. Die fertige Beschichtung wird auch als Dispersionsbeschichtung bezeichnet.

Bei dieser Vorgehensweise können die katalytisch aktiven Komponenten zu verschiedenen Zeitpunkten auf die spezifische Oberfläche der Trägermaterialien aufgebracht werden. Es ist zum Beispiel bekannt, die katalytisch aktiven Komponenten erst nach Beschichten der Wabenkörper mit der Dispersionsbeschichtung durch Eintauchen der beschichteten Wabenkörper in eine wäßrige Lösung von löslichen Vorstufen der katalytisch aktiven Komponenten auf den Trägermaterialien abzuscheiden. Alternativ hierzu besteht die Möglichkeit, die katalytisch aktiven Komponenten in einem dem Anfertigen der Dispersionsbeschichtung vorgeschalteten Arbeitsschritt auf die pulverförmigen Trägermaterialien aufzubringen.

Die vorliegende Erfindung befaßt sich mit dieser zweiten Möglichkeit der Abscheidung der katalytisch aktiven Komponenten. Zur Erreichung einer hohen katalytischen Aktivität muß die Art der Abscheidung eine möglichst feindisperse Abscheidung der Komponenten auf der spezifischen Oberfläche der Trägermaterialien gewährleisten. Darüber hinaus soll die Art der Abscheidung auch zu einer hohen Temperatur- und Alterungsstabilität des fertigen Katalysators führen, das heißt, die Partikel der katalytisch aktiven Komponenten müssen gut auf der Oberfläche der Trägermaterialien fixiert sein, um ein Zusammenwachsen benachbarter Partikel bei Temperaturbelastung des Katalysators zu verhindern.

Für das Abscheiden der katalytisch aktiven Komponenten auf den pulverförmigen Trägermaterialien sind verschiedene Verfahren bekannt geworden. Hierzu gehört zum Beispiel die Imprägnierung mit einem Überschuß an Imprägnierlösung. Hierbei wird dem pulverförmigen Trägermaterial eine wäßrige Lösung der katalytisch aktiven Komponenten zugesetzt, deren Volumen wesentlich größer sein kann, als die Wasseraufnahmekapazität des Trägermaterials. Es resultiert dabei eine Masse mit breiiger Konsistenz, die zum Beispiel in einem Ofen bei erhöhten Temperaturen von 80 - 150°C entwässert und anschließend bei noch höheren Temperaturen zur Fixierung der katalytisch aktiven Komponenten kalziniert wird. Beim Entwässern kann es zu chromatografischen Effekten kommen, die zu einer ungleichmäßigen Verteilung der katalytisch aktiven Komponenten auf dem Trägermaterial führen können.

Bei der sogenannten Porenvolumenimprägnierung wird zur Lösung der katalytisch aktiven Komponenten eine Menge an Lösungsmittel verwendet, die etwa 70 - 100 % der Aufnahmekapazität des Trägermaterials für dieses Lösungsmittel entspricht. In der Regel handelt es sich hierbei um Wasser. Diese Lösung wird möglichst gleichmäßig, zum Beispiel durch Sprühen über das in einem Kessel umgewälzte Trägermaterial verteilt. Nach Verteilung der gesamten Lösung über dem Trägermaterial ist dieses trotz des Wassergehaltes immer noch rieselfähig. Anschließend wird das imprägnierte Material getrocknet und zur Fixierung der katalytisch aktiven Komponenten auf dem Trägermaterial bei erhöhten Temperaturen kalziniert. Mit der Porenvolumenimprägnierung können chromatografische Effekte weitgehend vermieden werden. Sie liefert in der Regel bessere Ergebnisse, als das oben beschriebene Verfahren der Imprägnierung mit einem Überschuß an Lösungsmittel.

Nachteilig bei diesen bekannten Verfahren der Imprägnierung von Trägermaterialien mit katalytisch aktiven Komponenten ist die Tatsache, daß die katalytisch aktiven Komponenten nach dem Imprägniervorgang auf den Trägermaterialien durch Trocknungs- und Kalzinierungsbehandlungen unter Verbrauch hoher Energiemengen auf den Trägermaterialien fixiert werden müssen, um zu verhindern, daß sie beim notwendigen Redispergieren des Trägermaterials zur Anfertigung der Beschichtungsdispersion wieder vom Trägermaterial desorbieren.

Die deutsche Offenlegungsschrift 28 18 824 beschreibt ein Verfahren zur Herstellung einer Katalysatorzusammensetzung. Zu diesem Zweck wird ein feinteiliger Oxidträger mit einer wasserlöslichen Verbindung eines Platingruppenmetalls unter Bildung eines Verbundes in Kontakt gebracht, wobei der Verbund im wesentlichen frei von freier Flüssigkeit ist. Die katalytisch wirkende Metallkomponente wird in eine in Wasser unlösliche Form überführt. Das so hergestellte Pulvermaterial wird zu einer Aufschlämmung, die vorzugsweise sauer ist, verarbeitet und anschließend auf Wabenkörper aufgebracht.

Knözinger untersucht in "Acidic and basic properties of aluminas in relation to their properties as catalysts and supports" (in Catalysis by Acids and Bases, 1985 Elsevier Science Publishers B.V., Seiten 111 bis 125) die Bedeutung der sauren und basischen Eigenschaften auf die Wechselwirkung mit Vorläuferverbindungen von katalytisch aktiven Komponenten.

Die US 5,272,125 beschreibt die Herstellung einer Beschichtungsdispersion und eines Katalysators für die Behandlung von Dieselabgas. Die Beschichtungsdispersion enthält als feinteilige Trägermaterialien Siliziumdioxid, Titanoxid, Vanadiumoxid und Ton. Die EP 0 596 552 A1 beschreibt die Herstellung eines Katalysators für die Verminderung der Rußpartikel im Abgas von Dieselmotoren. Die katalytisch aktive Komponente des Katalysators besteht im wesentlichen aus einer Feststoffsäure. Bevorzugt wird ein Zeolith eingesetzt.

Aufgabe der vorliegenden Erfindung ist es, ein Verfahren zur Herstellung eines Katalysators anzugeben, welches eine hochdisperse Verteilung der katalytisch aktiven Komponenten auf den Trägermaterialien gewährleistet und bei dem aufwendige Trocknungsschritte und Kalzinierschritte weitgehend vermieden werden. Als hochdispers gelten Kristallitgrößen der katalytisch aktiven Komponenten von weniger als 10 nm, bevorzugt zwischen 2 und 7 nm.

Diese Aufgabe wird erfindungsgemäß gelöst durch ein Verfahren zur Herstellung eines Katalysators mit der Merkmalen des Anspruchs 1.

Als hochoberflächig werden im Rahmen dieser Erfindung Materialien verstanden, deren spezifische Oberfläche (gemessen nach DIN 66132) mehr als 10 m$^2$/g beträgt. Für die Autoabgasreinigung werden als katalytisch aktive Komponenten bevorzugt die Edelmetalle der Platingruppe des periodischen Systems der Elemente verwendet. Hierzu gehören Ruthenium, Rhodium, Palladium, Osmium, Iridium und Platin.

Die Adsorption der Vorläuferverbindungen auf den Trägermaterialien hängt sowohl von der Oberflächenbeschaffenheit der Trägermaterialien als auch von den Vorläuferverbindungen und dem pH-Wert der Imprägnierlösung ab. Es ist zum Beispiel bekannt, daß Nitrate der Platingruppenmetalle auf Aluminiumoxid sehr stark, Chloride bei entsprechender Acidität der Imprägnierlösung dagegen nur schwach adsorbiert werden. Dies wird bei der Herstellung von Pelletkatalysatoren ausgenutzt, um die Verteilung der katalytisch aktiven Elemente in den Pellets zu beeinflussen. Bei Verwendung von Nitraten wird zum Beispiel ein ausgeprägtes Schalenprofil erhalten, während bei Verwendung von Chloriden eine nahezu gleichmäßige Durchdringung des gesamten Pellets mit den aktiven Komponenten möglich ist.

Es hat sich gezeigt, daß weder eine sehr starke noch eine schwache Adsorption zu einer optimalen Dispersion der katalytisch aktiven Edelmetalle auf Pulvermaterialien führt. Bei sehr starker Adsorption werden die Pulverpartikel der Trägermaterialien nur ungenügend von den Vorläuferverbindungen durchdrungen. Die Vorläuferverbindungen lagern sich nur auf dem äußeren Teil der spezifischen Oberfläche der Pulverpartikel ab. Die dadurch resultierende hohe Konzentration in diesem Bereich führt zu einer Vergröberung der Kristallitgrößen der katalytisch aktiven Edelmetalle. Bei schwacher Adsorption der Vorläuferverbindungen bleiben diese jedoch noch lange mobil. Bei Trocknung der imprägnierten Trägermaterialien kommt es daher zu chromatografischen Effekten mit sehr ungleichmäßiger Verteilung der katalytisch aktiven Edelmetalle auf verschiedenen Anteilen des imprägnierten Materials. Die Kristallitgrößen der Edelmetalle weisen dadurch ein sehr breites Spektrum auf. Neben sehr kleinen Kristalliten liegt auch ein erheblicher Anteil der Edelmetalle mit Kristallitgrößen oberhalb von 10 nm vor.

Es wurde nun gefunden, daß bei geeigneter Kombination der Trägermaterialien mit den Vorläuferverbindungen der Edelmetalle eine gleichmäßige und hochdisperse Abscheidung der Edelmetalle möglich ist. Dies ist zum Beispiel dann der Fall, wenn wenigstens eines der feinteiligen Materialien einen isoelektrischen Punkt zwischen 6 und 10 aufweist und wenn als Vorläuferverbindungen anionische Salze der Platingruppenmetalle verwendet werden. Diese Eigenschaftskombination führt zu einer gleichmäßigen Durchdringung der Pulverpartikel des entsprechenden Materials und einer guten Adsorption. Die Adsorption beruht in diesem Fall im wesentlichen auf einer elektrostatischen Wechselwirkung zwischen den positiven Oberflächenladungen des Trägermaterials und den negativ geladenen Anionen.

Nach dem Imprägnieren werden die Vorläuferverbindungen auf den Trägermaterialien thermisch fixiert. Hierzu wird das imprägnierte Pulvermaterial zunächst bei Temperaturen bis 180°C getrocknet und dann bei Temperaturen oberhalb von 300°C kalziniert. Beim Kalzinieren werden die Vorläuferverbindungen zersetzt. Je nach gewählter Temperatur und Art der Vorläuferverbindung bildet sich dabei ein Gemisch verschiedener Oxidationsstufen der Edelmetalle, die bei der nachfolgenden Anfertigung der wäßrigen Beschichtungsdispersion nicht wieder in Lösung gehen.

In einer besonders vorteilhaften Variante des erfindungsgemäßen Verfahrens wird auf die thermische Fixierung der Vorläuferverbindungen verzichtet. Vielmehr wird das von dem Imprägniervorgang noch feuchte Pulvermaterial direkt zu einer wäßrigen Beschichtungsdispersion verarbeitet. Durch Einstellen des pH-Wertes dieser Dispersion auf einen Wert, welcher um 1 bis 3 Einheiten unter dem genannten isoelektrischen Punkt, bevorzugt zwischen 4 und 8, liegt, wird verhindert, daß die Vorläuferverbindungen wieder in Lösung gehen. Durch diese Vorgehensweise können erhebliche Energiekosten zur thermischen Fixierung der Vorläuferverbindungen eingespart und der gesamte Herstellprozeß des Katalysators sehr effizient gestaltet werden.

Zur Durchführung der Porenvolumenimprägnierung wird die Mischung der gewählten Trägermaterialien zum Beispiel in einem Kessel gleichmäßig umgewälzt, während die Lösung der Vorläuferverbindungen mit Hilfe einer Düse über dem Pulvermaterial versprüht wird. Hierbei wird erfindungsgemäß das verwendete Lösungsmittelvolumen auf maximal 90% der Aufnahmekapazität der Pulvermischung begrenzt. Durch die geringe Lösungsmittelmenge wird verhindert, daß die einmal adsorbierten Vorläuferverbindungen wieder desorbieren und zu größeren Kristalliten zusammenwachsen können. Je geringer hierbei das Lösungsmittelvolumen gewählt wird, um so sicherer wird die unerwünschte Desorption verhindert. Das Lösungsmittelvolumen ist jedoch nach unten durch die Forderung begrenzt, daß in dem verwendeten Volumen die für die gewünschte Beladung der Trägermaterialien notwendige Menge der Vorläuferverbindungen gelöst werden muß. Dies kann je nach Löslichkeit der Vorläuferverbindungen zu unterschiedlichen Untergrenzen für das Lösungsmittelvolumen führen. In der Regel sind Lösungsmittelvolumina unter 40% nicht mehr anwendbar. Besonders vorteilhaft für das erfindungsgemäße Verfahren sind Lösungsmittelvolumina zwischen 50 und 70% der Aufnahmekapazität der Pulvermischung.

Sollte das Lösungsmittelvolumen von 90% der Wasseraufnahmekapazität wegen zu geringer Löslichkeit der Vorläuferverbindungen nicht ausreichen, um die gewünschte Menge der katalytisch aktiven Komponenten in einem Imprägniervorgang auf den Trägermaterialien aufzubringen, so kann die Imprägnierung mit einer geringeren Menge an Lösungsmittel mit entsprechenden Zwischentrocknungen mehrfach wiederholt werden.

Der Imprägniervorgang muß trotz der geringen Lösungsmittelvolumina gewährleisten, daß alle Teile der Pulvermischung gleichmäßig mit der Imprägnierlösung in Berührung kommen. Hierzu wird das Pulvermaterial in einem Kessel umgewälzt und die Imprägnierlösung mit konstantem Volumenstrom über die Oberfläche des Pulvermaterials versprüht. Es haben sich Volumenströme von 50 ml Lösung pro Kilogramm Pulvermaterial und Minute bewährt (50 ml/ (Kg·min)). Oberhalb von 200 ml/(Kg·min) kann das Pulvermaterial nicht mehr ausreichend gleichmäßig imprägniert werden. Unterhalb von 5 ml/(Kg·min) werden die Imprägnierzeiten unwirtschaftlich lang.

Das so imprägnierte Pulvermaterial ist noch voll rieselfähig, was seine Weiterverarbeitung wesentlich erleichtert. Es wird entweder nach thermischer Fixierung oder direkt ohne weitere thermische Behandlung in Wasser und gegebenenfalls organischen Zusätzen dispergiert, um die Beschichtungsdispersion für den inerten Tragkörper anzufertigen. Nach dem Beschichten des Tragkörpers mit der so erhaltenen Dispersion wird die Beschichtung bei erhöhten Temperaturen von 80 bis etwa 180°C getrocknet und anschließend bei Temperaturen von über 300°C kalziniert.

Geeignete Trägermaterialien mit einem isoelektrischen Punkt zwischen 6 und 10 sind zum Beispiel Aluminiumoxid, Ceroxid, Zirkonoxid, Titanoxid, Siliziumdioxid oder Mischoxide davon. Die hierfür geeigneten anionischen Edelmetallsalze sind beispielsweise Methylethanolaminplatin(IV)-hexahydroxid, Ethanolaminplatin(IV)-hexahydroxid und Hexachloroplatin(IV)-säure oder Mischungen davon. Besonders bevorzugt sind die mit Methanolamin oder Ethanolamin komplexierten anionischen Salze der Platingruppenmetalle.

Häufig ist es für die gewünschte katalytische Wirkung eines fertigen Katalysators notwendig, daß bestimmte katalytisch aktive Komponenten nur auf bestimmten Trägermaterialien abgeschieden werden, um schädliche Wechselwirkungen zwischen katalytisch aktiven Komponenten und Trägermaterialien zu vermeiden. In einem solchen Fall müssen die verschiedenen Trägermaterialien eines Katalysators separat mit den jeweiligen Edelmetallen imprägniert werden. Erst danach wird aus diesen Materialien eine gemeinsame Beschichtungsdispersion angefertigt. So ist zum Beispiel bekannt, daß bei der Herstellung von Dieselkatalysatoren unter Verwendung von Zeolithen darauf geachtet werden muß, daß die Zeolithe nicht mit Platingruppenmetallen beschichtet werden, da dies zu Verkokungen an der Zeolithoberfläche führen kann. Daher mußten bisher die anderen Trägermaterialien des Dieselkatalysators separat mit den Platingruppenmetallen imprägniert werden, bevor sie mit den Zeolithanteilen zu einer gemeinsamen Beschichtungsdispersion vereinigt werden konnten. Überraschenderweise hat sich gezeigt, daß nach dem erfindungsgemäßen Verfahren eine solche Trennung nicht notwendig ist, da die anionischen Edelmetallsalze nur in sehr geringem Umfang von den Zeolithen adsorbiert werden.

Es wurde gefunden, daß die gewünschte Wechselwirkung zwischen Trägermaterial und Edelmetallsalzen auch bei Trägermaterialien mit einem isoelektrischen Punkt zwischen 2 und 7 erzielt werden kann, wenn kationische Edelmetallsalze verwendet werden. Auch in dieser Variante des erfindungsgemäßen Verfahrens kann wahlweise eine thermische Fixierung vorgenommen werden oder unterbleiben. Wird auf die thermische Fixierung verzichtet, so muß die Beschichtungsdispersion auf einen pH-Wert, welcher um 1 bis 5 Einheiten über dem genannten isoelektrischen Punkt, bevorzugt zwischen 7 und 9, liegt, eingestellt werden, um eine Desorption der Vorläuferverbindungen zu verhindern.

In Tabelle 1 sind verschiedene Trägermaterialien mit ihren isoelektrischen Punkten aufgelistet. Für die jeweiligen isoelektrischen Punkte wurden pH-Bereich angegeben, da die isoelektrischen Punkte eines bestimmten Trägeroxids je nach Herstellverfahren unterschiedliche Werte aufweisen und somit die isoelektrischen Punkte in einem gewissen pH-Bereich schwanken. So ist Titandioxid, welches sulfatisiert wurde, saurer als reines Titandioxid und weist somit einen niedrigeren isoelektrischen Punkt auf.

Die isoelektrischen Punkte von Tabelle 1 wurden nach dem Electrokinetic-Sonic-Amplitude-Verfahren mit dem Gerät ESA 8000 der Firma Matec Applied Sciences MA, USA gemessen. Eine Beschreibung des Meßverfahrens findet sich in dem Artikel von J. Winkler "Zeta potential of pigments and fillers" in EJC, 1-2/97, Seiten 38-42.

**Tabelle 1:** Trägermaterialien

| Material | isoelektrischer Punkt [pH] |
|---|---|
| Aluminiumoxid $Al_2O_3$ | 7,5 - 9,0 |
| Aluminiumsilikat $Al_2O_3 x SiO_2$ (95% $Al_2O_3$, 5% $SiO_2$) | 7,0 - 8,5 |
| Siliziumdioxid $SiO_2$ | 1,5 - 3,0 |
| Titanoxid $TiO_2$ | 5,5 - 7,5 |
| Zirkonoxid $ZrO_2$ | 6,0 - 7,5 |

Tabelle 2 nennt einige anionische und kationische Platinverbindungen, die in Kombination mit den Trägermaterialien von Tabelle 1 für das Verfahren geeignet sind. Die Platinkomplexe von Tabelle 2 sind beispielhaft für analoge Komplexe der anderen Platingruppenmetalle genannt.

**Tabelle 2:** Vorläuferverbindungen von Platin

| Anionische Platinkomplexe | Kationische Platinkomplexe |
|---|---|
| Methylethanolaminplatin(IV)-hexahydroxid $(MEA)_2Pt(OH)_6$ | Platinnitrat |
| Ethanolaminplatin(IV)-hexahydroxid $(EA)_2Pt(OH)_6$ | Tetraamminplatin(II)-nitrat $[Pt(NH_3)_4](NO_3)_2$ |
| Hexachloroplatin(IV)-säure $H_2PtCl_6$ | Tetraamminplatin(II)-hydroxid $[Pt(NH_3)_4](OH)_2$ |

Unter Anwendung des erfindungsgemäßen Verfahrens wurden in den folgenden Beispielen einige Katalysatoren hergestellt. Hierzu wurden die folgenden Rohstoffe verwendet:

Aluminiumsilikat: mit 5 Gew.-% Siliziumdioxid stabilisiertes Aluminiumoxid; spezifische Oberfläche: 153 $m^2/g$
Titandioxid: spezifische Oberfläche: 95 $m^2/g$
Zirkondioxid: spezifische Oberfläche: 96 $m^2/g$
DAY dealuminierte Y-Zeolith mit einem Molverhältnis von Siliziumdioxid/Aluminiumoxid von etwa 200

Methylethanolaminplatin(IV)-hydroxid
Ethanolaminplatin(IV)-hydroxid
Platinnitrat
Hexachloroplatin(IV)-säure: $H_2PtCl_6$

Tragkörper: offenzelliger Wabenkörper aus Cordierit mit 2,5 cm Durchmesser und 7,6 cm Länge; Zelldichte: 62 $cm^{-2}$; Wandstärke der Strömungskanäle: 0,2 mm

**Vergleichsbeispiel 1:**

Es wurde 1 Kg einer Pulvermischung aus Aluminiumsilikat und DAY-Zeolith im Gewichtsverhältnis 84:16 in einem Dragierkessel vorgelegt. Die Mischung besaß eine Wasseraufnahmekapazität von 1220 ml/Kg. Sie wurde unter ständigem Umwälzen mit 833 ml, entsprechend 68,3% der Wasseraufnahmekapazität der Pulvermischung, einer wäßrigen Lösung Tetraamminplatin(II)-nitrat mit einem Volumenstrom von 56 ml/(Kg·min) besprüht. Das noch rieselfähige Pulver wurde für die Dauer von 12 Stunden bei 150°C im Ofen getrocknet und anschließend zur Fixierung des Platins für die Dauer von 4 Stunden bei 300°C in Luft kalziniert. Das so hergestellte Pulver enthielt 0,95 Gew.-% Platin, bezogen auf sein Gesamtgewicht.
Die Untersuchung des Pulvers mit einem Transmissionselektronenmikroskop ergab eine mittlere Kristallitgröße des Platins von 10 nm. Unter Verwendung dieses Pulvers wurde eine wäßrige Beschichtungsdispersion angefertigt. Die Beschichtungsdispersion wies einen pH-Wert von 6 auf. Ein erster Wabenkörper wurde durch Eintauchen in diese Dispersion mit 140 g Trockenmasse pro Liter Wabenkörpervolumen beschichtet. Die Beschichtung wurde bei 120°C an Luft getrocknet und bei 300°C für 4 h an Luft kalziniert.

**Vergleichsbeispiel 2:**

Es wurde ein weiteres Kilogramm der Pulvermischung aus Aluminiumsilikat und DAY-Zeolith analog zu Vergleichsbeispiel 1 imprägniert. Das imprägnierte Pulver wurde jedoch nicht thermisch behandelt, sondern sofort zu einer wäßrigen Beschichtungsdispersion weiter verarbeitet, die ebenfalls einen pH-Wert von 6 aufwies. Die Analyse der wäßrigen Phase der Beschichtungsdispersion zeigte einen hohen Gehalt an Platin.

Ein zweiter Wabenkörper wurde durch Eintauchen in diese Dispersion beschichtet. Der getrocknete und kalzinierte Wabenkörper enthielt 140 g/l Trägermaterial und nur 0,56 g/l Platin.

**Beispiel 1**

Es wurde ein weiteres Kilogramm der Pulvermischung aus Aluminiumsilikat und DAY-Zeolith in gleicher Weise wie in Vergleichsbeispiel 1 mit Platin imprägniert. Anstelle von Tetraamminplatin(II)-nitrat wurde jedoch eine wäßrige Lösung von Monoethanolaminplatin(IV)-hydroxid zur Imprägnierung verwendet. Ebenso wie in Vergleichsbeispiel 1 wurde das noch rieselfähige Pulver für die Dauer von 12 Stunden bei 150°C im Ofen getrocknet und anschließend zur Fixierung des Platins für die Dauer von 4 Stunden bei 300°C in Luft kalziniert. Das so hergestellte Pulver enthielt 0,95 Gew.-% Platin, bezogen auf sein Gesamtgewicht.

Die Untersuchung des mit Platin aktivierten Pulvers ergab eine sehr gleichmäßige Verteilung der Platinkristallite auf dem Aluminiumsilikat. Die mittlere Kristallitgröße betrug 5 nm. Obwohl der Zeolith zusammen mit dem Aluminiumsilikat imprägniert worden war fanden sich auf den Zeolithpartikeln keine Platinkristallite.

Das mit Platin aktivierte Pulver wurde in Wasser dispergiert und durch Mahlen in einer Kugelmühle homogenisiert. Die Feststoffkonzentration der fertigen Beschichtungsdispersion betrug 35 Gew.-%. Der pH-Wert der Beschichtungsdispersion betrug 6,5. Die Untersuchung der wäßrigen Phase der Beschichtungsdispersion ergab keine Anhaltspunkte für eine Ablösung von Platinbestandteilen vom Aluminiumsilikat.

Ein dritter Wabenkörper wurde durch Eintauchen in diese Dispersion mit 140 g Trockenmasse pro Liter Wabenkörpervolumen beschichtet. Die Beschichtung wurde bei 120°C an Luft getrocknet und bei 300°C für 4 h an Luft kalziniert.

Der fertige Katalysator enthielt pro Liter Katalysatorvolumen 1,34 g Platin.

**Beispiel 2:**

Es wurde ein vierter Wabenkörper mit der Beschichtungsdispersion von Beispiel 1 beschichtet. Nach Kalzinierung der Beschichtung wurde der Katalysator für die Dauer von 2 Stunden im Formiergasstrom (95 Vol.-% $N_2$; 5 Vol.-% $H_2$) reduziert. Der Katalysator enthielt dieselben Beschichtungsmengen wie in Beispiel 1.

**Beispiel 3:**

Es wurde ein weiteres Kilogramm der Aluminiumsilikat/DAY-Zeolith-Mischung hergestellt und in gleichartiger Weise wie in Beispiel 1 beschrieben mit Platin imprägniert. Das imprägnierte Pulver wurde jedoch nicht thermisch behandelt, sondern sofort zu einer wäßrigen Beschichtungsdispersion verarbeitet. Die Dispersion wies einen pH-Wert von 6,5 auf. Die Analyse der wäßrigen Phase der Beschichtungsdispersion ergab keine Anzeichen für abgelöste Platinbestandteile (siehe hierzu Beispiel 8).

Mit dieser Dispersion wurde ein fünfter Wabenkörper beschichtet, getrocknet, kalziniert und reduziert. Die Beschichtungsmengen waren mit denen von Beispiel 1 identisch.

**Beispiel 4:**

Es wurde ein weiteres Kilogramm der Aluminiumsilikat/DAY-Zeolith-Mischung hergestellt und in gleichartiger Weise wie in Beispiel 3 beschrieben mit Platin imprägniert. Als Platinvorläufersubstanz wurde Ethanolaminplatin(IV)-hydroxid verwendet. Das imprägnierte Pulver wurde wie in Beispiel 3 beschrieben thermisch nicht behandelt, sondern sofort zu einer wäßrigen Beschichtungsdispersion verarbeitet. Die Dispersion wies einen pH-Wert von 6,5 auf.

Die Analyse der wäßrigen Phase der Beschichtungsdispersion ergab ebenfalls keine Anzeichen für abgelöste Platinbestandteile.

Mit dieser Dispersion wurde ein sechster Wabenkörper beschichtet, getrocknet, kalziniert und reduziert. Die Beschichtungsmengen waren mit denen von Beispiel 1 identisch.

**Beispiel 5:**

Es wurde ein weiteres Kilogramm der Aluminiumsilikat/DAY-Zeolith-Mischung hergestellt und in gleichartiger Weise wie in Beispiel 3 beschrieben mit Platin imprägniert. Als Platinvorläufersubstanz wurde Platinnitrat verwendet. Das imprägnierte Pulver wurde wie in Beispiel 3 beschrieben thermisch nicht behandelt, sondern sofort zu einer wäßrigen Beschichtungsdispersion verarbeitet. Die Dispersion wurde mittels Salpetersäure auf einen pH-Wert von 5,8 eingestellt. Die Analyse der wäßrigen Phase der Beschichtungsdispersion ergab ebenfalls keine Anzeichen für abgelöste Platinbestandteile.

Mit dieser Dispersion wurde ein siebter Wabenkörper beschichtet, getrocknet, kalziniert und reduziert. Die Beschichtungsmengen waren mit denen von Beispiel 1 identisch.

**Beispiel 6:**

Es wurde ein Kilogramm einer Titandioxid/DAY-Zeolith-Mischung hergestellt und in gleichartiger Weise wie in Beispiel 3 beschrieben mit Platin imprägniert. Die Pulvermischung hatte eine Wasseraufnahmekapazität von 920 ml/Kg. Das Volumen der Imprägnierlösung betrug 506 ml, also 55% der Wasseraufnahmekapazität der Pulvermischung. Als Platinvorläufersubstanz wurde Methylethanolaminplatin(IV)-hydroxid verwendet. Das imprägnierte Pulver wurde wie in Beispiel 3 beschrieben thermisch nicht behandelt, sondern sofort zu einer wäßrigen Beschichtungsdispersion verarbeitet. Die Dispersion wurde mittels Salpetersäure auf einen pH-Wert von 5,0 eingestellt. Die Analyse der wäßrigen Phase der Beschichtungsdispersion ergab ebenfalls keine Anzeichen für abgelöste Platinbestandteile.

**Beispiel 7**

Es wurde ein Kilogramm einer Zirkondioxid/DAY-Zeolith-Mischung hergestellt und in gleichartiger Weise wie in Beispiel 3 beschrieben mit Platin imprägniert. Die Pulvermischung hatte eine Wasseraufnahmekapazität von 875 ml/Kg. Das Volumen der Imprägnierlösung betrug 534 ml, also 61% der Wasseraufnahmekapazität der Pulvermischung. Als Platinvorläufersubstanz wurde Methylethanolaminplatin(IV)-hydroxid verwendet. Das imprägnierte Pulver wurde wie in Beispiel 3 beschrieben thermisch nicht behandelt, sondern sofort zu einer wäßrigen Beschichtungsdispersion verarbeitet. Die Dispersion wurde mittels Salpetersäure auf einen pH-Wert von 5,0 eingestellt. Die Analyse der wäßrigen Phase der Beschichtungsdispersion ergab ebenfalls keine Anzeichen für abgelöste Platinbestandteile.

Wie die vorstehenden Beispiele und Vergleichsbeispiele zeigen, kann nur durch richtige Materialkombination sichergestellt werden, daß die abgeschiedenen Edelmetallkomponenten ohne thermische Fixierung fest auf dem Trägermaterial haften und nicht bei der Anfertigung der Beschichtungsdispersion in die wäßrige Phase übergehen und so zu Verlusten an Edelmetall führen.

**Beispiel 8**

Die gemäß den Beispielen 1-4 mit Platin imprägnierten Trägeroxide wurden für die Herstellung von Beschichtungsdispersionen mit unterschiedlichen pH-Werten (4, 7 und 10) verwendet, um die mögliche Ablösung der Platinkomponenten von den Trägeroxiden durch die wäßrige Phase der Beschichtungsdispersionen zu überprüfen. Die Messung des Platingehaltes in der wäßrigen Phase wurde jeweils nach 2 und nach 24 Stunden sowie nach 7 Tagen vorgenommen. Diese Zeitspannen werden im folgenden als Standzeiten bezeichnet.

Zur Durchführung der Messung wurde die jeweilige 3eschichtungsdispersion abfiltriert und die wäßrige Phase mittels ICP-MS (ion coupled plasma - mass spectrometry) auf Platin analysiert. Der Platingehalt des Trägeroxids wurde aus der Differenz zwischen eingesetzter Platinmenge und der in Lösung analysierten Platinmenge ermittelt. Die Ergebnisse sind in Tabelle 3 aufgelistet.

Tabelle 3 enthält in der zweiten Spalte den Gehalt der Trägeroxide an Platin vor der Anfertigung der Beschichtungsdispersion. Er betrug in allen Fällen 0,95 Gew.-%. Die Spalten 5 bis 7 enthalten die in der wäßrigen Phase bei unterschiedlichen pH-Werten und den unterschiedlichen Standzeiten gemessenen Platinkonzentrationen in Gew.-% bezogen auf den Platingehalt des jeweiligen Trägeroxids. Die Spalten 8 bis 10 geben den daraus rechnerisch noch auf dem Trägeroxid verbliebenen Platingehalt.

In den Beispielen 1 und 2 wurden die Platinkomponenten thermisch auf den Trägeroxiden fixiert. Sie zeigen im Rahmen der Meßgenauigkeit keine Platinablösung durch die wäßrige Phase der Beschichtungsdispersion. In den Beispielen 3 und 4 wurden die Platinkomponenten auf den Trägeroxiden nicht thermisch fixiert. Aus Tabelle 3 ist zu erkennen, daß auch in diesem Fall bei richtiger Wahl des pH-Wertes der Beschichtungsdispersion (Werte unter 7) nur vernachlässigbare Platinablösungen zu beobachten sind. Bei falscher pH-Werteinstellung (pH=10) der Beschichtungsdispersion treten jedoch massive Platinablösungen von bis zu 30 Gew.-% auf.

**Tabelle 3: Platingehalt der wäßrigen Phase der Beschichtungsdispersionen bzw. der Trägeroxide in Abhängigkeit des pH-Wertes und der Standzeit gemäß Beispiel 8**

| Beispiel | Pt-Gehalt im Trägeroxid [Gew.-%] | Pt-Komplex | Standzeit | Pt in Lösung [Gew.-%] | | | Pt auf Feststoff [Gew.-%] | | |
|---|---|---|---|---|---|---|---|---|---|
| | | | | pH 4 | pH 7 | pH 10 | pH 4 | pH 7 | pH 10 |
| 1 | 0,95 | MEA-Pt | 2 h | < 0,05 | < 0,05 | < 0,05 | > 99,95 | > 99,95 | > 99,95 |
| 1 | 0,95 | MEA-Pt | 24 h | < 0,05 | < 0,05 | < 0,05 | > 99,95 | > 99,95 | > 99, 95 |
| 1 | 0,95 | MEA-Pt | 7 d | < 0,05 | < 0,05 | < 0,05 | > 99,95 | > 99,95 | > 99,95 |
| 2 | 0,95 | MEA-Pt | 2 h | < 0,05 | < 0,05 | < 0,05 | > 99,95 | > 99,95 | > 99,95 |
| 2 | 0,95 | MEA-Pt | 24 h | < 0,05 | < 0,05 | < 0,05 | > 99,95 | > 99,95 | > 99,95 |
| 2 | 0,95 | MEA-Pt | 7 d | < 0,05 | < 0,05 | < 0,05 | > 99,95 | > 99,95 | > 99,95 |
| 3 | 0,95 | MEA-Pt | 2 h | 0,15 | 0,57 | 31,47 | 99,85 | 99,43 | 68,53 |
| 3 | 0,95 | MEA-Pt | 24 h | 0,15 | 0,43 | 37,52 | 99,85 | 99,57 | 62,48 |
| 3 | 0,95 | MEA-Pt | 7 d | 0,17 | 0,30 | 32,97 | 99,83 | 99,70 | 67,03 |
| 4 | 0,95 | EA-Pt | 2 h | 0,37 | 0,25 | 22,54 | 99,63 | 99,75 | 77,46 |
| 4 | 0,95 | EA-Pt | 24 h | 0,36 | 0,37 | 33,57 | 99,64 | 99,63 | 66,43 |
| 4 | 0,95 | EA-Pt | 7 d | 0,39 | 0,28 | 39,31 | 99,61 | 99,72 | 60,69 |

**Anwendungsbeispiel 1**

Die katalytische Aktivität der Abgasreinigungskatalysatoren der vorstehenden Beispiele wurde an einer Synthesegasanlage gemessen. Mit dieser Anlage ist es möglich, nahezu alle im realen Abgas eines Diesel- oder Otto-Motors vorhandenen gasförmigen Abgaskomponenten zu simulieren. Die gewählten Prüfbedingungen und die Modellgaszusammensetzung sind in Tabelle 4 aufgelistet. Als Kohlenwasserstoffkomponente wurde n-Hexadecan, Trivialname Cetan, welches als Bezugssubstanz für die Bestimmung der Zündwilligkeit von Dieselkraftstoffen bekannt ist, verwendet. Diese langkettige, aliphatische Verbindung findet sich auch im realen Dieselabgas wieder.

**Tabelle 4:** Prüfbedingungen und Modellgaszusammensetzung zur Bestimmung der Umsetzungsraten der Schadstoffe CO, HC, $NO_x$ und $SO_2$ in der Synthesegasanlage.

| Komponente | Konzentration | |
|---|---|---|
| CO | 350 | [vppm] |
| $H_2$ | 117 | [vppm] |
| $C_{16}H_{34}$ | 90 | [ppmC3] |
| $SO_2$ | 20 | [vppm] |
| NO | 270 | [vppm] |
| $O_2$ | 6 | [Vol.-%] |
| $H_2O$ | 10 | [Vol.-%] |
| $CO_2$ | 10,7 | [Vol.-%] |
| $N_2$ | Rest | |
| Gasmenge | 1950 | [Nl/h] |
| Katalysatorgröße | Ø 25 mm x 76 mm | |
| Raumgeschwindigkeit | 50000 | [$h^{-1}$] |
| Aufheizungsrate | 15 | [°C/min] |

Zur Messung der im Abgas enthaltenen Gaskomponenten wurden die in Tabelle 5 angegebenen Meßgeräte verwendet.

EP 0 920 913 B1

**Tabelle 5:** Zusammenstellung der Meßgeräte zur Messung der Abgaskonzentration im Synthesegasteszstand

| Analysiertes Gas | Meßgerät | Hersteller |
|---|---|---|
| $O_2$ | Oxymat | Siemens AG |
| Kohlenwasserstoff | FID | Pierburg Meßtechnik |
| $NO_x$ | CLD 700 Elht | Zellweger ECO-Systeme |
| CO | Binos | Rosemount |
| $CO_2$ | Binos | Rosemount |
| $SO_2$ | Binos | Rosemount |

An der Synthesegasanlage wurden die Umsetzungen von Kohlenmonoxid und Kohlenwasserstoffen im Dauerbetrieb bei Abgastemperaturen von 140 °C gemessen. Die Messungen wurden sowohl an den frischen als auch an den gealterten Katalysatoren vorgenommen (Ofenalterung: 16 h bei 750°C an Luft + 10 Vol.-% $H_2O$ + 20 ppm $SO_2$).

Zur Bestimmung der Anspringtemperaturen wurde das Abgas ausgehend von 75°C mit einer Aufheizrate von 15°C/min erwärmt. Die Bestimmung der Umsetzung der Stickoxide wurde bei derjenigen Abgastemperatur $T_{NOx,max}$ vorgenommen, bei welcher die Stickoxidumsetzung ein Maximum aufwies. Diese Temperaturen sind in den Tabellen 6 und 7 hinter den jeweiligen Meßwerten in Klammern angegeben.

Die Berechnung der Umsetzungsraten erfolgte mittels folgender Formel

$$X \quad = \quad \frac{N_E - N_A}{N_E} \cdot 100\%$$

X = Umsetzungsrate [%]
$N_E$ = Konzentration des Schadstoffes vor Katalysator [vppm]
$N_A$ = Konzentration des Schadstoffes nach Katalysator [vppm]

Die Ergebnisse der Messungen sind in Tabelle 6 für die frischen Katalysatoren und in Tabelle 7 für die gealterten Katalysatoren aufgeführt.

**Tabelle 6:** Schadstoffumsetzung durch die Katalysatoren der Beispiele B1-B7 und V1-V2 im Frischzustand

| Beispiel | $T_{50\%}$ [°C] | | Umsetzung bei 140°C [%] | | NOx-Umsatz bei $T_{NOx,max}$ (in Klammern) [%] |
|---|---|---|---|---|---|
| | CO | HC | CO | HC | NOx |
| V1 | 153 | <75 | 21 | 79 | 45 (220°C) |
| V2 | 182 | <75 | 8 | 77 | 44 (234°C) |
| B1 | 150 | <75 | 34 | 83 | 41 (210°C) |
| B2 | 135 | <75 | 85 | 85 | 59 (182°C) |
| B3 | 136 | <75 | 84 | 84 | 57 (181°C) |
| B4 | 135 | <75 | 86 | 85 | 58 (181°C) |
| B5 | 139 | <75 | 52 | 81 | 55 (185°C) |
| B6 | 147 | <75 | 36 | 82 | 44 (190°C) |
| B7 | 144 | <75 | 39 | 83 | 49 (188°C) |

**Patentansprüche**

1.  Verfahren zur Herstellung eines Katalysators, welcher auf einem inerten Tragkörper eine katalytisch aktive Beschichtung aus pulverförmigen Materialien mit einer spezifischen Oberfläche von mehrals 10m$^2$/g und katalytisch aktiven Komponenten aus der Gruppe der Platingruppenmetalle aufweist, durch Aufbringen der katalytisch aktiven Komponenten auf die pulverförmigen Materialien, Anfertigen einer Beschichtungsdispersion aus diesen Materialien und Beschichten des Tragkörpers damit, wobei
das Verfahren die folgendenVerfahrensschritte enthält:

a1) Imprägnieren einer Pulvermischung aus den vorgesehenen pulverförmigen Materialien mit einer Lösung von Vorläuferverbindungen der katalytisch aktiven Komponenten, nämlich anionischen Komplexen der Platingruppenmetalle, nach dem Verfahren der Porenvolumenimprägnierung, wobei wenigstens eines der pulverförmigen Materialien einen isoelektrischen Punkt zwischen 6 und 10 aufweist und wobei die Vorläuferverbindungen auf wenigstens einem der pulverförmigen Materialien absorbiert werden,

b1) ohne thermische Fixierung der Vorläuferverbindungen, Anfertigen einer wäßrigen Beschichtungsdispersion unter Verwendung der imprägnierten Pulvermischung, wobei die Beschichtungsdispersion auf einen pH-Wert, welcher um 1 bis 3 Einheiten unter dem genannten isoelektrischen Punkt liegt, eingestellt wird,

oder

a2) Imprägnieren einer Pulvermischung aus den vorgesehenen pulverförmigen Materialien mit einer Lösung von Vorläuferverbindungen der katalytisch aktiven Komponenten, nämlich kationischen Komplexen der Platingruppenmetalle, nach dem Verfahren der Porenvolumenimprägnierung, wobei wenigstens eines der pulverförmigen Materialien einen isoelektrischen Punkt zwischen 2 und 7 aufweist und wobei die Vorläuferverbindungen auf wenigstens einem der pulverförmigen Materialien absorbiert werden,

b2) ohne thermische Fixierung der Vorläuferverbindungen, Anfertigen einer wäßrigen Beschichtungsdispersion unter Verwendung der imprägnierten Pulvermischung, wobei die Beschichtungsdispersion auf einen pH-Wert, welcher um 1 bis 5 Einheiten über dem genannten isoelektrischen Punkt liegt, eingestellt wird,

c) Beschichten des Tragkörpers mit der so erhaltenen Dispersion und

d) Trocknen und Kalzinieren der Beschichtung.

2. Verfahren nach Anspruch 1, wobei das Verfahren die verfahrensschritte a1) und b1) enthält und der pH-wert der wäßrigen Beschichtungsdispersion zwischen 4 und 8 liegt.

3. Verfahren nach Anspruch 2, wobei
das Lösungsmittelvolumen bei der Porenvolumenimprägnierung zu 40 bis 90% der Wasseraufnahmekapazität der Pulvermischung gewählt wird.

4. Verfahren nach Anspruch 3, wobei
die vorgesehenen pulverförmigen Materialien aus wenigstens einem Material aus der Gruppe Aluminiumoxid, Ceroxid, Zirkonoxid, Titanoxid oder aus Mischoxiden dieser Materialien untereinander oder mit Siliziumdioxid bestehen.

5. Verfahren nach Anspruch 4, wobei
als anionische Komplexe der Platingruppenmetalle Chloride oder mit Alkanolaminen komplexierte anionische Salze oder Mischungen davon verwendet werden.

6. Verfahren nach Anspruch 5, wobei
als weiteres pulverförmiges Material wenigstens ein Zeolith mit einem Molverhältnis Siliziumdioxid/Aluminiumoxid von über 50 verwendet wird.

7. Verfahren nach Anspruch 6, wobei
die fertige Beschichtung auf dem Tragkörper bei Temperaturen über 300°C in einem wasserstoffhaltigen Gasstrom reduziert wird.

8. Verfahren nach Anspruch 1, wobei das Verfahren die Verfahrensschritte a2) und b2) enthält und der pH-wert der wäßrigen Beschichtungsdispersion zwischen 7 und 9 liegt.

9. Verfahren nach Anspruch 8, wobei
das Lösungsmittelvolumen bei der Porenvolumenimprägnierung zu 40 bis 90% der Wasseraufnahmekapazität der Pulvermischung gewählt wird.

10. Verfahren nach Anspruch 9, wobei
die vorgesehenen pulverförmig Materialien aus wenigstens einem Material aus der Gruppe Titanoxid, Ceroxid, Zirkonoxid und Siliciumdioxid oder Mischoxiden davon bestehen.

**11.** Verfahren nach Anspruch 10, wobei
als kationische Komplexe der Platingruppenmetalle Tetraamminkomplexe, Nitrate, oder Mischungen davon verwendet werden.

**Claims**

**1.** A method for preparing a catalyst which comprises a catalytically active coating comprising powdery materials having a specific surface of more than 10 m$^2$/g, and catalytically active components selected from the metals of the platinum group metals on an inert support structure, by applying the catalytically active components to the powdery materials, preparing a coating dispersion from these materials and coating the support structure therewith, wherein the method comprises the following method steps:

a1) impregnating a powder mixture of the designated powdery materials with a solution of precursor compounds of the catalytically active components, namely with anionic complexes of the platinum group metals, by the method of the pore volume impregnation wherein at least one of the powdery materials has an isoelectric point of between 6 and 10 and wherein the precursor compounds are absorbed on at least one of the powdery materials,
b1) without thermal fixation of the precursor compounds, preparing a watery coating dispersion by using the impregnated powder mixture wherein the pH-value of the coating dispersion is adjusted to a value which is 1 to 3 units below the mentioned isoelectric point,

or

a2) impregnating a powder mixture of the designated powdery materials with a solution of precursor compounds of the catalytically active components, namely cationic complexes of the platinum group metals, by the method of the pore volume impregnation, wherein at least one of the powdery materials has an isoelectric point of between 2 and 7 and wherein the precursor compounds are absorbed on at least one of the powdery materials,
b2) without thermal fixation of the precursor compounds, preparing a watery coating dispersion by using the impregnated powder mixture, wherein the pH-value of the coating dispersion is adjusted to a value which is 1 to 5 units above the mentioned isoelectric point,
c) coating the support structure with the dispersion obtained in this way and
d) drying and calcinating the coating.

**2.** The method according to claim 1, wherein the method comprises the method steps a1) and b1) and the pH-value of the watery coating dispersion is between 4 and 8.

**3.** The method according to claim 2, wherein the solvent volume for pore volume impregnation is chosen to be 40 to 90 % of the water absorption capacity of the powder mixture.

**4.** The method according to claim 3, wherein the designated powdery materials comprise at least one material from the group aluminium oxide, cerium oxide, zircomium oxide, titanium oxide or mixtures of these materials with each other or with silicon dioxide.

**5.** The method according to claim 4, wherein chlorides or anionic salts complexed with alkanolamines or mixtures thereof are used as anionic complexes of the platinum group metals.

**6.** The method according to claim 5, wherein at least one zeolite with a molar ratio of silicon dioxide to aluminium dioxide of more than 50 is used as another powdery material.

**7.** The method according to claim 6, wherein the final coating on the support structure is reduced at temperatures above 300°C in a hydrogen-containing gas stream.

**8.** The method according to claim 1, wherein the method comprises the method steps a2) and b2) and the pH-value of the watery coating dispersion is between 7 and 9.

**9.** The method according to claim 8, wherein the solvent volume for pore volume impregnation is chosen to b 40 to 90 % of the water absorption capacity of the powder mixture.

**10.** The method according to claim 9, wherein the designated powdery materials comprise at least one material from the group titanium oxide, cerium oxide, zirconium oxide or mixed oxides thereof.

**11.** The method according to claim 10, wherein tetraamine complexes, nitrates or mixtures thereof are used as cationic complexes of the platinum group metals.

**Revendications**

**1.** Procédé de production d'un catalyseur qui présente, sur un corps de support inerte, un revêtement catalytiquement actif composé de matériaux pulvérulents et ayant une surface spécifique de plus de 10 m$^2$/g, ainsi que des composants catalytiquement actifs appartenant au groupe des métaux du groupe du platine, par l'application des composants catalytiquement actifs sur les matériaux pulvérulents, la fabrication d'une dispersion de revêtement composée de ces matériaux et le recouvrement du corps de support à l'aide de cette dispersion, ce procédé comprenant les opérations suivantes :

a1) imprégnation d'un mélange de poudres, composé des matériaux pulvérulents prévus, à l'aide d'une solution de composés précurseurs des composants catalytiquement actifs, à savoir de complexes anioniques des métaux du groupe du platine, selon le procédé d'imprégnation de volume poreux, au moins un des matériaux pulvérulents présentant un point isoélectrique compris entre 6 et 10 et les composés précurseurs étant absorbés sur au moins un des matériaux pulvérulents,
b1) sans fixation thermique des composés précurseurs, la fabrication d'une dispersion de revêtement aqueuse utilisant le mélange de poudres imprégné, la dispersion de revêtement étant ajustée à un pH qui se situe de 1 à 3 unités en dessous du point isoélectrique précité,

ou

a2) imprégnation d'un mélange de poudres composé des matériaux pulvérulents prévus à l'aide d'une solution de composés précurseurs des composants catalytiquement actifs, à savoir de complexes cationiques des métaux du groupe du platine, selon le procédé d'imprégnation de volume poreux, au moins un des matériaux pulvérulents présentant un point isoélectrique compris entre 2 et 7 et les composés précurseurs étant absorbés sur au moins un des matériaux pulvérulents,
b2) sans fixation thermique des composés précurseurs, la fabrication d'une dispersion de revêtement aqueuse utilisant le mélange de poudres imprégné, la dispersion de revêtement étant ajustée à un pH qui se situe de 1 à 5 unités au-dessus du point isoélectrique précité,
c) revêtement du support avec la dispersion ainsi obtenue et
d) séchage et calcination du revêtement.

**2.** Procédé selon la revendication 1,
avec les opérations a1) et b1) et le pH de la dispersion de revêtement aqueuse se situe entre 4 et 8.

**3.** Procédé selon la revendication 2,
selon lequel
le volume de solvant pour l'imprégnation de volume poreux est choisi entre 40 et 90 % de la capacité d'absorption d'eau du mélange de poudres.

**4.** Procédé selon la revendication 3,
selon lequel
les matériaux pulvérulents prévus se composent d'au moins un matériau du groupe constitué par l'oxyde d'aluminium, l'oxyde de cérium, l'oxyde de zirconium, l'oxyde de titane ou encore des oxydes mixtes de ces matériaux entre eux ou avec le dioxyde de silicium.

**5.** Procédé selon la revendication 4,
selon lequel
comme complexes anioniques, on utilise des métaux du groupe du platine, des chlorures ou des sels anioniques complexés à l'aide d'alcanolamines ou encore des mélanges de ceux-ci.

**6.** Procédé selon la revendication 5,

selon lequel
comme matériau pulvérulent supplémentaire, on utilise au moins un zéolithe comprenant un rapport molaire, entre le dioxyde de silicium et l'oxyde d'aluminium, supérieur à 50.

7. Procédé selon la revendication 6,
selon lequel
on réduit le revêtement achevé sur le corps de support, à des températures supérieures à 300°C, dans un courant gazeux contenant de l'hydrogène.

8. Procédé selon la revendication 1,
avec les opérations a2) et b2) et le pH de la dispersion de revêtement aqueuse se situe entre 7 et 9.

9. Procédé selon la revendication 8,
selon lequel
le volume de solvant pour l'imprégnation de volume poreux est choisi entre 40 et 90 % de la capacité d'absorption d'eau du mélange de poudres.

10. Procédé selon la revendication 9,
selon lequel
les matériaux pulvérulents prévus se composent d'au moins un matériau du groupe constitué par l'oxyde de titane, l'oxyde de cérium, l'oxyde de zirconium, et le dioxyde de silicium ou des oxydes mixtes de ceux-ci.

11. Procédé selon la revendication 10,
selon lequel
comme complexes cationiques, on utilise des métaux du groupe du platine, des complexes de tétraamine, des nitrates ou des mélanges de ceux-ci.